# EUROPÄISCHE PATENTSCHRIFT

(11) **EP 3 438 959 B1**
(45) Veröffentlichungstag und Bekanntmachung des Hinweises auf die Patenterteilung: **07.12.2022**
(21) Anmeldenummer: 18183926.7
(22) Anmeldetag: 17.07.2018
(51) Int. Cl.: G09F 21/04, G09F 9/30, G09F 27/00, B60Q 1/26, B60Q 1/50

(54) **DACHWERBETRÄGER FÜR EIN FAHRZEUG**
ROOF ADVERTISING HOLDER FOR A VEHICLE
PORTE-PUBLICITÉ SUR TOIT POUR UN VÉHICULE

(30) Priorität: 01.08.2017 DE 102017213283
(43) Veröffentlichungstag der Anmeldung: 06.02.2019
(73) Patentinhaber: TAXi-AD GmbH, 22525 Hamburg (DE)
(72) Erfinder: Wellner, Henning, 22767 Hamburg (DE)
(74) Vertreter: Glawe, Delfs, Moll

(56) Entgegenhaltungen:
- EP-A2- 1 262 371
- KR-B1- 101 490 218
- US-A1- 2002 084 891
- US-A1- 2008 236 007

## Beschreibung

Die Erfindung betrifft einen Dachwerbeträger für ein Fahrzeug. Ein solcher Werbeträger kann auf dem Dach eines Fahrzeugs angebracht werden, so dass sich eine oberhalb des Dachs angeordnete Werbefläche ergibt, siehe EP 1 262 371 A2. Solche Dachwerbeträger werden bislang mit austauschbaren Werbeplakaten bestückt. Das Bereitstellen und Wechseln der Werbeplakate ist mit einigem Aufwand verbunden.

Verwendet man zur Darstellung der Werbung ein Grafikdisplay statt der Werbeplakate, wird der logistische Aufwand vermindert. Allerdings sind die Einsatzbedingungen auf dem Dach eines Fahrzeugs nicht günstig für ein Grafikdisplay. Unter anderem wirken Erschütterungen und Witterungseinflüsse auf den Dachwerbeträger. Dokument US2008/0236007 A1 stellt ein Anzeigesystem mit einer Anzeigeeinheit vor, wobei die Anzeigeeinheit in einem Gehäuse eingeschlossen ist, wobei das Gehäuse mit Lüftungskanalöffnungen versehen ist und, wobei die Anzeigeeinheit zwei nach außen gerichtete Anzeigetafeln beinhaltet. Dokument KR 101 490 218 B1 behandelt eine Werbevorrichtung in einem Gehäuse mit Lufteinlassöffnungen und einem Wärmetauscher.

Der Erfindung liegt die Aufgabe zugrunde, einen Dachwerbeträger vorzustellen, der die Verwendung eines Grafikdisplays ermöglicht. Ausgehend vom genannten Stand der Technik wird die Aufgabe gelöst mit den Merkmalen des Anspruchs 1. Vorteilhafte Ausführungsformen sind in den Unteransprüchen angegeben.

Bei dem erfindungsgemäßen Dachwerbeträger wird ein Gehäuse von einem Grundrahmen getragen. In dem Gehäuse sind zwei Grafikdisplays angeordnet. Ein Lüftungskanal erstreckt sich durch das Gehäuse hindurch. Innerhalb des Gehäuses ist zwischen jedem Grafikdisplay und dem Lüftungskanal eine Trennwand angeordnet.

Durch das Gehäuse kann das Grafikdisplay vor dem direkten Einfluss von Feuchtigkeit und Niederschlägen geschützt werden. Allerdings wird durch das Gehäuse auch die Möglichkeit der Wärmeabfuhr eingeschränkt, so dass das Risiko einer Überhitzung des Grafikdisplays besteht. Dies gilt insbesondere, wenn zusätzlich zu der Betriebswärme des Grafikdisplays eine Sonneneinstrahlung auf das Gehäuse einwirkt. Indem das Gehäuse mit einem Lüftungskanal ausgestattet ist, wird die Wärmeabfuhr verbessert, so dass die Betriebstemperatur des Grafikdisplays in einem zulässigen Bereich gehalten werden kann. Die erfindungsgemäße Trennwand hat den Vorteil, dass ein direkter Kontakt zwischen dem Grafikdisplay und der einströmende Außenluft vermieden wird.

Der Lüftungskanal kann sich von einem Eintritt in das Gehäuse bis zu einem Austritt aus dem Gehäuse erstrecken. Der Eintritt und der Austritt des Lüftungskanals können an gegenüberliegenden Enden des Gehäuses angeordnet sein, so dass der Lüftungskanal sich über die gesamte Ausdehnung des Gehäuses zwischen diesen beiden Enden erstreckt.

Der Eintritt des Lüftungskanals kann in Fahrtrichtung ausgerichtet sein, wenn der Dachwerbeträger bestimmungsgemäß auf dem Fahrzeug angebracht ist. Der Austritt des Lüftungskanals kann entgegen der Fahrtrichtung ausgerichtet sein. Auf diese Weise kann mit dem Fahrtwind ein Luftstrom durch den Lüftungskanal erzeugt werden. Alternativ oder zusätzlich dazu kann ein Gebläse vorgesehen sein, mit dem unabhängig von einer Bewegung des Fahrzeugs ein Luftstrom durch den Lüftungskanal erzeugt werden kann. Das Gebläse kann temperaturgesteuert sein und beispielsweise in Gang gesetzt werden, wenn ein vorgegebener Temperatur-Schwellwert innerhalb des Gehäuses überschritten wird. Zum Ermitteln der Temperatur kann der erfindungsgemäße Dachwerbeträger einen in dem Gehäuse angeordneten Temperatursensor umfassen.

Jede Trennwand zwischen einem der Grafikdisplays und dem Lüftungskanal kann so gestaltet sein, dass sie zusammen mit einem Abschnitt des Gehäuses eine Umhüllung für das Grafikdisplay bildet. Eine solche Trennwand hat den Vorteil, dass ein direkter Kontakt zwischen dem Grafikdisplay und der einströmende Außenluft vermieden wird. Für eine gute Wärmeabfuhr kann die Trennwand aus einem Material mit guter Wärmeleitfähigkeit bestehen. Die Trennwand kann beispielsweise aus Aluminium gefertigt sein. Die aus der Trennwand und dem Gehäuseabschnitt gebildete Umhüllung des Grafikdisplays ist vorzugsweise so gestaltet, dass ein Eintritt von Feuchtigkeit in die Umhüllung ausgeschlossen ist.

Für die Wärmeabfuhr ist es von Vorteil, wenn Luft in der Grafikdisplay-Umhüllung in Bewegung versetzt werden kann. Der erfindungsgemäße Dachwerbeträger kann ein Gebläse umfassen, um eine Luftbewegung innerhalb der Umhüllung anzutreiben. Die in der Umhüllung angeordnete Luft ist vorzugsweise getrennt von der Luft in dem Lüftungskanal.

Der erfindungsgemäße Dachwerbeträger umfasst ein erstes Grafikdisplay und ein zweites Grafikdisplay. Beide Grafikdisplays sind innerhalb des Gehäuses angeordnet. Die Grafikdisplays können in verschiedenen Richtungen ausgerichtet sein. Die Grafikdisplays können bezogen auf eine horizontale Dimension und/oder eine vertikale Dimension parallel zueinander ausgerichtet sein. Dabei können die Grafikdisplays nach außen ausgerichtet sein, so dass die angezeigten Inhalte von unterschiedlichen Seiten des Fahrzeugs aus betrachtet werden können.

Zwischen den Grafikdisplays ist ein Hohlraum ausgebildet. Der Hohlraum ist im Inneren des Gehäuses angeordnet. Der Lüftungskanal erstreckt sich durch den Hohlraum hindurch. Damit kann eine wirksame Kühlung von elektronischen Bauteilen erreicht werden, die auf der Rückseite der Grafikdisplays angeordnet sind.

Der Hohlraum ist zwischen zwei Trennwänden eingeschlossen. Jede der Trennwände kann Element einer Umhüllung für eines der Grafikdisplays sein. Das Gehäuse umfasst demnach zwei Umhüllungen, wobei in jeder Umhüllung eines der Grafikdisplays angeordnet ist. Zwischen den Umhüllungen ist der Hohlraum des Gehäuses eingeschlossen.

Zwischen dem Innenraum der ersten Umhüllung und dem Innenraum der zweiten Umhüllung kann ein Verbindungskanal ausgebildet sein. Der Verbindungskanal kann den Hohlraum des Gehäuses queren. Durch einen solchen Verbindungskanal wird ein Luftaustausch zwischen dem Innenraum der ersten Umhüllung und dem Innenraum der zweiten Umhüllung ermöglicht.

Es können ein erster Verbindungskanal und ein zweiter Verbindungskanal zwischen den Umhüllungen ausgebildet sein. Durch zwei Verbindungskanäle wird die Möglichkeit eröffnet, die Luft zwischen den Innenräumen der Umhüllungen in einem Kreislauf auszutauschen. Es kann ein Gebläse vorgesehen sein, um die Luft in Bewegung zu halten. Das Gebläse kann in einem Verbindungskanal angeordnet sein.

In einer Ausführungsform der Erfindung ist in dem ersten Verbindungskanal ein erstes Gebläse und in dem zweiten Verbindungskanal ein zweites Gebläse angeordnet. Das erste Gebläse kann von der ersten Umhüllung in Richtung der zweiten Umhüllung wirken, das zweite Gebläse kann von der zweiten Umhüllung in Richtung der ersten Umhüllung wirken. Auf diese Weise kann ein geschlossener Luftkreislauf zwischen der ersten Umhüllung und der zweiten Umhüllung erzeugt werden.

Die Trennwände, an denen der Luftkreislauf entlang strömt, können als Kühlelemente dienen. Durch den Luftkreislauf findet eine Wärmeübertragung von den elektronischen Bauteilen der Grafikdisplays auf die Trennwände statt. Die gegenüberliegenden Seiten der Trennwände können an den Lüftungskanal angrenzen, der sich durch das Gehäuse hindurch erstreckt. Durch den Luftstrom in dem Lüftungskanal wird die Wärme von den Trennwänden aufgenommen und nach außen abgeführt. Diese Weise kann eine wirksame Kühlung der Grafikdisplays erreicht werden, ohne dass die Grafikdisplays in einen direkten Kontakt mit der Au-ßenluft kommen.

Das Gehäuse des erfindungsgemäßen Dachwerbeträgers kann über eine bewegliche Verbindung an dem Grundrahmen befestigt sein. In einem Nutzzustand kann das Gehäuse eine aufrechte Position haben, so dass das Grafikdisplay zur Seite weist. In einem Ruhezustand kann das Gehäuse eine liegende Position haben. In dem Ruhezustand kann das Grafikdisplay so angeordnet sein, dass es für Passanten nicht sichtbar ist und beispielsweise in einer liegenden Position sein. Von dem Ruhezustand kann beispielsweise Gebrauch gemacht werden, um Schäden an dem Dachwerbeträger zu vermeiden, wenn das Fahrzeug durch eine Waschanlage fährt.

Für den Wechsel zwischen dem Nutzzustand und dem Ruhezustand kann ein Schwenkgelenk zwischen dem Gehäuse und dem Grundrahmen vorgesehen sein. Die Achse des Schwenkgelenks kann horizontal ausgerichtet sein und sich parallel zu dem Grafikdisplays erstrecken.

Der Dachwerbeträger kann einen Verriegelungsmechanismus umfassen, um das Gehäuse in dem Nutzzustand zu arretieren. Der Verriegelungsmechanismus kann einen Verriegelungshebel umfassen, der einen Zapfen umgreift. Der Zapfen kann mit dem Gehäuse verbunden sein, der Verriegelungshebel kann mit dem Grundrahmen verbunden sein. Der Dachwerbeträger kann so eingerichtet sein, dass das Gehäuse im Ruhezustand alleine aufgrund der Gewichtskraft eine stabile Position einnimmt.

Das Schwenkgelenk kann einen die Schwenkachse definierenden Schwenkzapfen umfassen. Der Lüftungskanal kann sich durch das Innere des Schwenkzapfens hindurch erstrecken. Insbesondere ist es möglich, dass das Schwenkgelenk einen ersten Schwenkzapfen und einen zweiten Schwenkzapfen umfasst. Die Schwenkzapfen können an gegenüberliegenden Enden des Gehäuses angeordnet sein. Wenn der Lüftungskanal sich durch den ersten Schwenkzapfen und den zweiten Schwenkzapfen hindurch erstreckt, kann der Lüftungskanal die gesamte Länge zwischen diesen beiden Enden des Gehäuses abdecken.

Der Dachwerbeträger kann ein Taxischild umfassen. Taxischilder sind üblicherweise so angeordnet, dass sie entweder zum Front oder zum Heck des Fahrzeugs weisen. Eine horizontale Achse des Taxischilds kann mit einer horizontalen Achse des Grafikdisplays einen rechten Winkel einschließen, wenn das Gehäuse im Nutzzustand ist.

Der Dachwerbeträger kann ein erstes Taxischild und ein zweites Taxischild umfassen. Das erste Taxischild kann nach vorne weisen, das zweite Taxischild kann nach hinten weisen. Das Gehäuse des erfindungsgemäßen Dachwerbeträgers kann zwischen dem ersten Taxischild und dem zweiten Taxischild angeordnet sein.

Ein Taxischild kann so angeordnet sein, dass es den Eintritt des Lüftungskanals abdeckt. Das zweite Taxischild kann so angeordnet sein, dass es den Austritt des Lüftungskanals abdeckt. Dies hat den Vorteil, dass der Lüftungskanal dem Fahrtwind nur indirekt ausgesetzt ist, so dass beispielsweise ein Eindringen von Regenwasser in den Lüftungskanal vermieden werden kann.

Der Dachwerbeträger kann eine Beleuchtung für das Taxischild umfassen, die dazu ausgelegt ist, mit einem Schalter aus dem Innenraum des Fahrzeugs betätigt zu werden. Die Beleuchtung kann inaktiviert werden, wenn das Gehäuse im Ruhezustand ist. Im inaktiven Zustand ist die Beleuchtung ausgeschaltet unabhängig davon, in welcher Stellung der Schalter im Innenraum des Fahrzeugs ist. Auf diese Weise kann sichergestellt werden, dass der Fahrer das Gehäuse mit den Grafikdisplays immer in den Nutzzustand bringt, wenn das Taxi im Einsatz ist. Ein Dachwerbeträger, bei dem die Beleuchtung eines Taxischilds inaktiviert wird, wenn das Gehäuse im Ruhezustand ist, hat eigenständigen erfinderischen Gehalt, auch ohne dass sich ein Lüftungskanal durch das Gehäuse hindurch erstreckt.

Der Grundrahmen kann eine Befestigungseinrichtung umfassen, um den erfindungsgemäßen Dachwerbeträger auf dem Dach eines Fahrzeugs anbringen zu können. Die Befestigungseinrichtung kann magnetische Pads umfassen, die auf dem Dachblech des Fahrzeugs haften, ohne den Lack zu zerkratzen. Möglich sind auch andere Arten von Verbindungen zwischen dem Dachwerbeträger und dem Fahrzeug, beispielsweise Klebeverbindungen oder mechanische Verbindungen.

Ein Grafikdisplay im Sinne der Erfindung ist dazu ausgelegt, ein in Datenform gespeichertes Bild anzuzeigen. Der Dachwerbeträger kann einen Speicher umfassen, in dem eines oder mehrere Bilder gespeichert sind. Mit einer Steuereinheit kann eingestellt werden, welche Bilder für wie lange gezeigt werden und zu welchen Zeitpunkten zwischen den Bildern gewechselt wird. Umfasst der Dachwerbeträger zwei Grafikdisplays, so können diese gleiche Bilder oder verschiedene Bilder anzeigen.

Das Grafikdisplay kann beispielsweise eine horizontale Länge zwischen 80 cm und 120 cm haben sowie eine vertikale Höhe zwischen 15 cm und 40 cm. Die Helligkeit des Grafikdisplays kann einstellbar sein. Die maximale Helligkeit des Grafikdisplays kann beispielsweise zwischen 800 Candela/m² und 2500 Candela/m² liegen.

Die Versorgung des Grafikdisplays kann über das Stromnetz des Fahrzeugs erfolgen. Entsprechende Versorgungskabel können sich zwischen dem Stromnetz des Fahrzeugs und dem Dachwerbeträger erstrecken. Die Versorgungskabel können durch das Innere eines Schwenkzapfens in den Innenraum des Gehäuses geführt sein.

Das Grafikdisplay kann über die Zündung des Fahrzeugs angesteuert werden. Insbesondere kann das Grafikdisplay durch Anschalten der Zündung aktiviert werden. Möglich ist, das Grafikdisplay mit dem Ausschalten der Zündung wieder zu aktivieren. In einer Ausführungsform ist eine Nachlaufzeit vorgesehen, so dass das Grafikdisplay auch nach dem Ausschalten der Zündung aktiv bleibt. Die Nachlaufzeit kann beispielsweise zwischen 5 Minuten und 30 Minuten, vorzugsweise zwischen 10 Minuten und 20 Minuten lang sein.

Wird das Grafikdisplay über die Batterie des Fahrzeugs betrieben, so kann ein Sensor vorgesehen sein, der ein Abschaltsignal an das Grafikdisplay sendet, wenn die Batterieladung unter einen vorgegebenen Schwellwert absinkt. Der Sensor kann beispielsweise ein Spannungssensor sein und ein Abschaltsignal geben, wenn die Batteriespannung unter 11,2 V absinkt.

Der Dachwerbeträger kann dazu ausgelegt sein, die in dem Speicher zu speichernden Bilder über eine Funk-Datenverbindung zu empfangen. Ebenso kann das Steuerungsprogramm, mit dem die Abfolge der Bilder definiert wird, über eine Funk-Datenverbindung empfangen werden. Die Datenübertragung kann über ein Mobilfunknetz erfolgen. Der Dachwerbeträger kann eine SIM-Karte für die Verbindung mit dem Mobilfunknetz umfassen.

Der Speicher für die Daten und die Steuereinheit können innerhalb des Gehäuses angeordnet sein. Die Antenne für die Funk-Datenverbindung kann außerhalb des Gehäuses angeordnet sein. Eine Kabelverbindung zwischen der Antenne und dem Innenraum des Gehäuses kann durch das Innere eines Schwenkzapfens des Gehäuses hindurch geführt sein.

Zusätzlich oder alternativ zu der Funk-Datenverbindung kann ein kabelgebundener Anschluss für das Übertragen von Daten vorgesehen sein. Beispielweise kann die Datenübertragung über eine USB-Steckverbindung erfolgen. Der Stecker der Kabelverbindung kann außerhalb des Gehäuses angeordnet sein. Die Kabelverbindung in den Innenraum des Gehäuses kann durch das Innere eines Schwenkzapfens des Gehäuses hindurch geführt sein.

Der Dachwerbeträger kann so ausgelegt sein, dass die Funk-Datenverbindung für die im normalen Betrieb des Dachwerbeträgers auszutauschenden Daten genutzt wird. Die kabelgebundene Datenverbindung kann für Wartungszwecke genutzt werden.

Das Grafikdisplay kann so eingerichtet sein, dass die Helligkeit der Anzeige in Abhängigkeit von einem Steuersignal variiert werden kann. Damit wird es möglich, die Helligkeit der Grafikdisplays an die Umgebungshelligkeit anzupassen. Beispielweise kann das Grafikdisplay tagsüber mit größerer Helligkeit betrieben werden als bei Dunkelheit.

Das Steuersignal für die Helligkeit der Grafikdisplays kann von einem Lichtsensor stammen, der die Helligkeit in der Umgebung des Dachwerbeträgers misst. Möglich ist auch, dass das Steuersignal von einer Steuereinheit generiert wird, die Informationen wie Tageszeit, Wetterbedingungen und Ähnliches verarbeitet, um das Steuersignal zu erzeugen.

Der Dachwerbeträger kann ein Modul zur geographischen Ortung umfassen, beispielsweise in Form eines GPS-Moduls. Damit wird es möglich Bewegungsprofile des Fahrzeugs aufzuzeichnen. In Kombination mit der ebenfalls gespeicherten Information, welche Bilder das Grafikdisplays zu welcher Zeit dargestellt hat, können den Werbekunden umfassen Informationen über die tatsächlich erfolgte Werbung zur Verfügung gestellt werden.

Möglich ist auch, das Grafikdisplay in Abhängigkeit von der geographischen Position des Dachwerbeträgers anzusteuern. Beispielsweise kann die Anzeige eines Werbekunden, der nur in einem Lokal eng begrenzten Umfeld tätig ist, nur dann eingeblendet werden, wenn der Dachwerbeträger in dem relevanten geographischen Gebiet ist.

Zusätzlich oder alternativ dazu kann das Grafikdisplay zeitabhängig angesteuert werden. Werden bestimmte Produkte oder Dienstleistungen bevorzugt zu bestimmten Tageszeiten gekauft, so können die zugehörigen Werbeanzeigen zu passenden Tageszeiten eingeblendet werden.

Zusätzlich oder alternativ dazu kann das Grafikdisplay wetterabhängig angesteuert werden. Werbeanzeigen für Produkte, die in erster Linie bei bestimmten Wetterbedingungen gekauft werden, können zu passender Zeit dargestellt werden. Der Dachwerbeträger kann Wettersensoren umfassen, beispielsweise für die Temperatur oder die Luftfeuchtigkeit. Eine Steuereinheit kann dazu ausgelegt sein, die Messwerte der Wettersensoren zu verarbeiten, um daraus ein Steuersignal für das Grafikdisplay abzuleiten, gemäß dem das Grafikdisplay eine bestimmte Werbeanzeige darstellt. Zusätzlich oder alternativ dazu kann die Steuereinheit dazu ausgelegt sein, Wetterdaten über eine Funk-Datenverbindung zu empfangen. Die Wetterdaten können aktuelle Wetterdaten oder Prognosedaten sein. Ermittelt die Steuereinheit das Steuersignal für das Grafikdisplay unter Berücksichtigung von Prognosedaten, so wird die Möglichkeit eröffnet, beim Einblenden von Werbeanzeigen die zukünftige Wetterentwicklung einfließen zu lassen.

Ein Dachwerbeträger, bei dem eine Steuereinheit ein Grafikdisplay wetterabhängig, zeitabhängig und/oder abhängig von der geographischen Position ansteuert, hat eigenständigen erfinderischen Gehalt, auch ohne dass ein Lüftungskanal sich durch das Gehäuse des Werbeträgers hindurch erstreckt. Ansteuern in diesem Sinne bedeutet, dass ein Grafikdisplay angewiesen wird, die in einem bestimmten Datensatz enthaltene grafische Information anzuzeigen. Die Erfindung betrifft außerdem ein Verfahren, bei dem ein Grafikdisplay eines Dachwerbeträgers wetterabhängig, zeitabhängig und/oder abhängig von der geographischen Position angesteuert wird. Das Verfahren kann mit weiteren Merkmalen fortgebildet werden, die im Zusammenhang des erfindungsgemäßen Dachwerbeträgers beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: einen erfindungsgemäßen Dachwerbeträger bei bestimmungsgemäßer Verwendung;
- Fig. 2:: einen erfindungsgemäßen Dachwerbeträger im Nutzzustand;
- Fig. 3:: den Dachwerbeträger aus Fig. 2 im Ruhezustand;
- Fig. 4:: eine schematische Schnittdarstellung des Dachwerbeträgers aus Fig. 2;
- Fig. 5:: einen Vertikalschnitt in Querrichtung durch ein Gehäuse eines erfindungsgemäßen Dachwerbeträgers in vergrößerter Darstellung;
- Fig. 6:: einen Horizontalschnitt durch ein Gehäuse eines erfindungsgemäßen Dachwerbeträgers;
- Fig. 7:: ein Blockschaltbild eines erfindungsgemäßen Dachwerbeträgers.

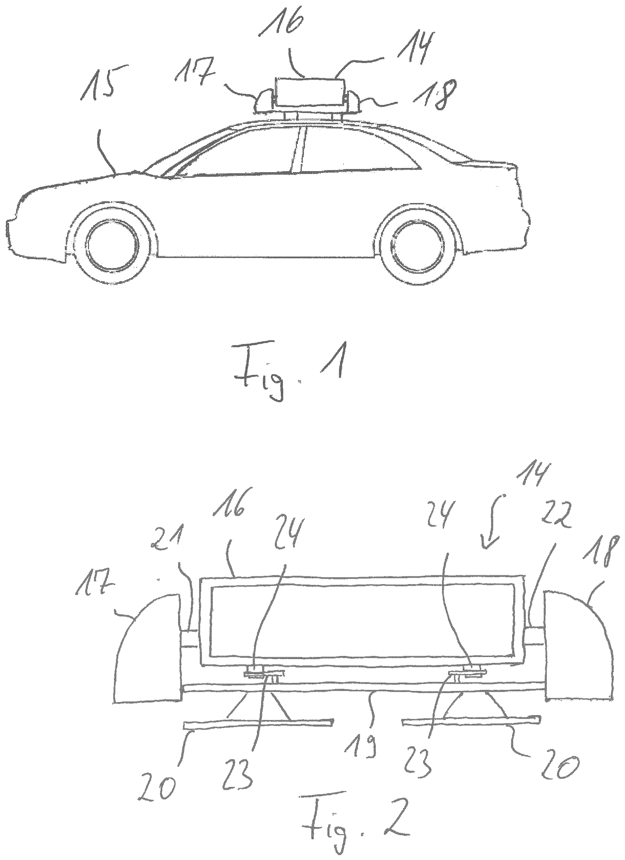

In Fig. 1 ist ein erfindungsgemäßer Dachwerbeträger 14 bei bestimmungsgemäßer Verwendung auf dem Dach eines Taxifahrzeugs 15 gezeigt. Der Dachwerbeträger 14 umfasst ein Gehäuse 16, das zwischen zwei nach vorne und hinten weisenden Taxischildern 17, 18 angeordnet ist. Werbeanzeigen, die auf den seitlichen Flächen des Gehäuses 16 gezeigt werden, können von Passanten gut wahrgenommen werden.

Der Dachwerbeträger 14 umfasst gemäß Fig. 2 einen Grundrahmen 19, an dem zwei Magnetpads 20 angebracht sind. Die Magnetpads 20 haften auf dem Dachblech des Taxifahrzeugs 15 und sorgen für eine sichere Befestigung des Dachwerbeträgers 14 an dem Taxifahrzeug 15.

Das Gehäuse 16 des Dachwerbeträgers 14 ist schwenkbar relativ zu dem Grundrahmen 19 gelagert. Mit dem Gehäuse 16 sind zwei Schwenkzapfen 21, 22 verbunden, die drehbar in zwei Lageraufnahmen aufgenommen sind, die in Fig. 2 durch die Taxischilder 17, 18 verdeckt sind. Eine Schwenkbewegung des Gehäuses 16 relativ zu dem Grundrahmen 19 ist in dem in Fig. 2 gezeigten Nutzzustand blockiert durch zwei Verriegelungshebel 23, die in Eingriff mit Verriegelungszapfen 24 stehen.

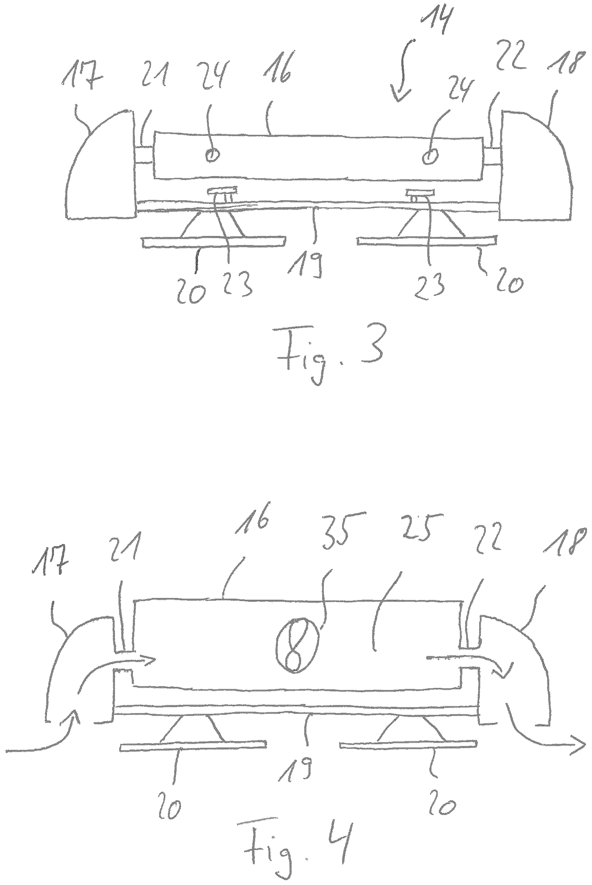

Nach Lösen des Verriegelungsmechanismus 23, 24 kann das Gehäuse 16 relativ zu dem Grundrahmen 19 geschwenkt werden und in den in Fig. 3 gezeigten Ruhezustand gebracht werden. Im Ruhezustand kann das Taxifahrzeug 15 beispielsweise durch eine Waschanlage fahren, ohne dass der Dachwerbeträger 14 Schaden nimmt.

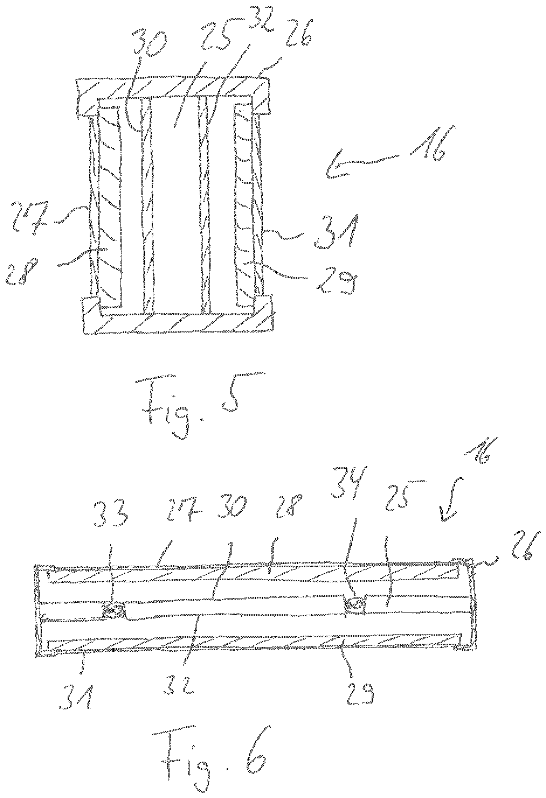

Gemäß der in Fig. 5 gezeigten Querschnittsdarstellung umfasst das Gehäuse 16 eine Plastikschale 26, die beispielsweise aus PMMA bestehen kann. Die Plastikschale 26 bildet die obere Fläche, die untere Fläche und die vordere und hintere Stirnfläche des Gehäuses 16. In den beiden Seitenflächen hat die Plastikschale 26 rechteckige Ausnehmungen, in die jeweils eine Plexiglasscheibe 27, 31 eingesetzt ist. Hinter jeder der Plexiglasscheiben 27, 31 ist ein Grafikdisplay 28, 29 angeordnet, so dass das von dem Grafikdisplay 28, 29 angezeigte Bild durch die Plexiglasscheibe 27, 31 hindurch sichtbar ist.

Das erste Grafikdisplay 28 ist eingeschlossen zwischen der ersten Plexiglasscheibe 27, den angrenzenden Bereichen der Plastikschale 26 sowie einer im Inneren des Gehäuses 16 angeordneten ersten Trennwand 30 aus Aluminium. Die erste Plexiglasscheibe 27, die erste Trennwand 30 und die zugehörigen Bereiche der Plastikschale 26 bilden eine geschlossene Umhüllung um das erste Grafikdisplay 28 herum. Die Umhüllung 26, 27, 30 ist dicht, so dass das Grafikdisplay 28 weder mit der Außenluft noch mit Feuchtigkeit in Berührung kommt.

Auf entsprechende Weise ist das zweite Grafikdisplay 29 in eine Umhüllung aus der zweiten Plexiglasscheibe 31, einer zweiten Trennwand 32 und den zugehörigen Abschnitten der Plastikschale 26 eingeschlossen. Zwischen der ersten Trennwand 30 und der zweiten Trennwand 32 ist ein Hohlraum 25 eingeschlossen.

Die von den Grafikdisplays 28, 29 erzeugte Betriebswärme wird in erster Linie in den Innenraum der Umhüllungen abgegeben. Um die Wärme wirksam nach außen zu transportieren und eine Überhitzung der Grafikdisplays 28, 29 zu vermeiden, umfasst der erfindungsgemäße Dachwerbeträger ein Kühlsystem, das wie folgt aufgebaut ist.

Zwischen der ersten Trennwand 30 und der zweiten Trennwand 32 sind ein erster Verbindungskanal 33 und ein zweiter Verbindungskanal 34 ausgebildet. In jedem der Verbindungskanäle 33, 34 ist ein Gebläse angeordnet, wobei das erste Gebläse von der ersten Trennwand 30 zu der zweiten Trennwand 32 wirkt und das zweite Gebläse in entgegengesetzte Richtung wirkt. Wenn beide Gebläse in den Verbindungskanälen 33, 34 in Betrieb sind, ergibt sich ein geschlossener

Luftkreislauf zwischen dem Innenraum der ersten Umhüllung 26, 27, 30 und dem Innenraum der zweiten Umhüllung 26, 31, 32. Insbesondere streicht die Luft großflächig an den Trennwänden 30, 32 entlang, so dass eine gute Wärmeüberleitung auf die Trennwände 30, 32 erreicht wird. Die Gebläse in den Verbindungskanälen 33, 34 sind immer in Betrieb, wenn die Grafikdisplays 28, 29 in Betrieb sind. Zusätzlich werden die Gebläse in den Verbindungskanälen 33, 34 auch bei inaktiven Grafikdisplays 28, 29 automatisch in Betrieb gesetzt, wenn eine bestimmte Temperatur in dem Gehäuse 16 überschritten wird.

Der zwischen den Trennwänden 30, 32 eingeschlossene Hohlraum 25 ist Bestandteil eines Lüftungskanals, der sich längs durch das Gehäuse 16 hindurch erstreckt. Gemäß Fig. 4 haben die beiden Taxischilder 17, 18 an ihrer Unterseite eine Öffnung. Der Lüftungskanal erstreckt sich von der Öffnung des ersten Taxischilds 17 durch das Innere des Schwenkzapfens 21 hindurch in den Hohlraum 25 in dem Gehäuse 16. Der Lüftungskanal erstreckt sich weiter durch das Innere des zweiten Schwenkzapfens 22 und das zweite Taxischild 18 hindurch bis zu der Öffnung am unteren Ende des zweiten Taxischilds 18.

Ist das Taxifahrzeug 15 in Bewegung, ergibt sich durch den Fahrtwind ein kontinuierlicher Luftstrom entlang diesem Lüftungskanal. Der Luftstrom strömt an der Innenseite der Trennwände 30, 32 vorbei so dass die auf die Trennwände 30, 32 übertragene Wärme mit dem Luftstrom wirksam nach außen abgeführt wird. Dadurch wird die Betriebstemperatur der Grafikdisplays 28, 29 in einem zulässigen Bereich gehalten.

Um eine wirksame Kühlung auch dann möglich zu machen, wenn das Taxifahrzeug 15 steht und kein Fahrtwind wirkt, ist in dem Lüftungskanal ein Gebläse 35 angeordnet, das einen Luftstrom entlang dem Lüftungskanal erzeugen kann. Das Gebläse 35 wird temperaturabhängig angesteuert, so dass es bei Überschreiten einer bestimmten Temperatur im Inneren des Gehäuses 16 automatisch in Betrieb gesetzt wird.

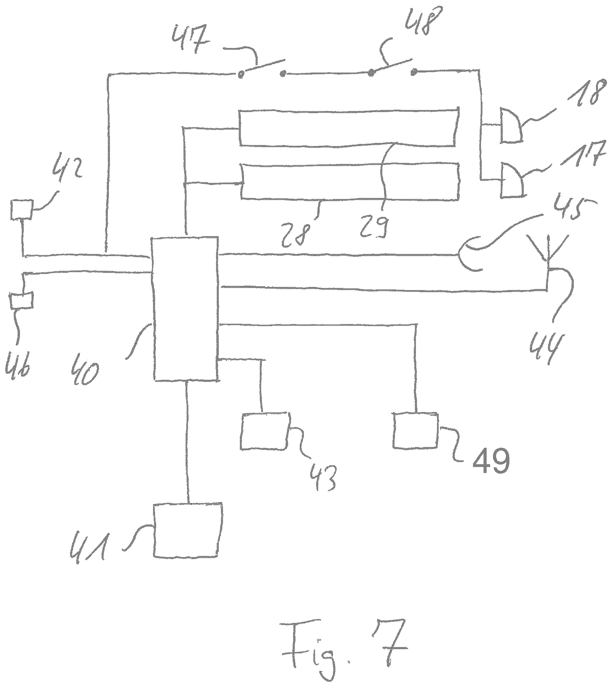

Gemäß Fig. 7 umfasst der Dachwerbeträger eine Steuereinheit 40 zur Ansteuerung der Grafikdisplays 28, 29. Die Steuereinheit 40 liest aus einem Speicher 41 einen Datensatz aus, der eine grafische Darstellung repräsentiert. Der Datensatz wird an die Grafikdisplays 28, 29 gesendet, so dass diese die grafische Darstellung anzeigen. Die Steuereinheit 40 erhält ein Signal von dem Schalter 42 des Taxifahrzeugs 15, sobald die Zündung eingeschaltet ist. Mit diesem Signal nimmt die Steuereinheit 40 ihren Betrieb auf.

Ein in der Steuereinheit 40 hinterlegtes Steuerprogramm verarbeitet eine von einem GPS-Modul 43 erhaltene Information über die aktuelle geographische Position. Das Steuerprogramm verarbeitet außerdem Informationen über die aktuelle Zeit, das aktuelle Wetter sowie eine Wetterprognose, die das Steuerprogramm über eine Funk-Datenverbindung 44 erhält. Auf Basis dieser Informationen kann das Steuerprogramm entscheiden, welche der in dem Speicher 41 hinterlegten Datensätze für die Darstellung auf den Grafikdisplays 28, 29 auszuwählen ist.

Nachdem ein bestimmtes Bild für eine vorgegebene Zeitdauer angezeigt wurde, wählt das Steuerprogramm einen anderen Datensatz für die Anzeige auf den Grafikdisplays 28, 29 aus, so dass im laufenden Wechsel unterschiedliche Werbeanzeigen dargestellt werden.

Das Steuerprogramm in der Steuereinheit 40 verarbeitet weiter eine Information von einem Lichtsensor 45 über die aktuelle Helligkeit in der Umgebung des Dachwerbeträgers 14. Die Helligkeit der Grafikdisplays 28, 29 wird so angepasst, dass die Werbeanzeigen einerseits gut wahrgenommen werden können und andererseits niemand geblendet wird.

Die in dem Speicher 41 hinterlegten Datensätze werden regelmäßig aktualisiert. Dazu wird die Funk-Datenverbindung 44 aktiviert, um neue Datensätze von einem Server zu dem Datenspeicher 41 zu übertragen. Auf dem gleichen Wege können auch neue Vorgaben für die Auswahl der Datensätze an die Steuereinheit 40 übertragen werden. Über einen USB-Anschluss 49 kann zu Wartungszwecken auf die Steuereinheit 40 zugegriffen werden.

Die Steuereinheit 40 ist so eingerichtet, dass sie nach Ausschalten der Zündung 42 die Grafikdisplays 28, 29 für eine Nachlaufzeit von 15 Minuten in Betrieb hält. Nach Ablauf der Nachlaufzeit schaltet die Steuereinheit 40 die Grafikdisplays 28, 29 aus. Während der Nachlaufzeit wertet die Steuereinheit 40 die Signale von einem Spannungssensor 46 aus, der die Spannung der Fahrzeugbatterie des Taxifahrzeugs 15 überwacht. Meldet der Spannungssensor 46 eine Spannung von weniger als 11,2 V, so werden die Grafikdisplays 28, 29 schon vor Ablauf der Nachlaufzeit ausgeschaltet. Auf diese Weise wird eine übermäßige Belastung der Fahrzeugbatterie vermieden.

Die Beleuchtung der Taxischilder 17, 18 wird ebenfalls über den Zündungsschalter 42 des Taxifahrzeug 15 angesteuert. Die Beleuchtung der Taxischilder 17, 18 ist ausgeschaltet, wenn die Zündung aus ist. Bei eingeschalteter Zündung kann die Beleuchtung der Taxischilder 17, 18 vom Fahrer über einen im Innenraum des Taxifahrzeugs 15 angeordneten Schalter 47 ausgeschaltet werden. Trotz eingeschaltetem Schalter 47 bleibt die Beleuchtung aus, wenn der Schalter 48 geöffnet ist. Dies ist der Fall, wenn das Gehäuse 16 in den Ruhezustand geschwenkt ist. Im Betriebszustand des Gehäuses 16 ist der Schalter 48 geschlossen. Die Beleuchtung der Taxischilder 17, 18 ist in Betrieb, wenn die Zündung eingeschaltet ist und beide Schalter 47, 48 geschlossen sind.

## Patentansprüche

1. Dachwerbeträger für ein Fahrzeug (15) mit einem Grundrahmen (19), der ein Gehäuse (16) trägt, und mit zwei in dem Gehäuse (16) angeordneten Grafikdisplays (28, 29), wobei ein Lüftungskanal vorgesehen ist, der sich durch das Gehäuse (16) hindurch erstreckt, **dadurch gekennzeichnet, dass** innerhalb des Gehäuses (16) eine erste Trennwand (30) zwischen dem ersten Grafikdisplay (28) und dem Lüftungskanal und eine zweite Trennwand (32) zwischen dem zweiten Grafikdisplay (29) und dem Lüftungskanal angeordnet sind, wobei der Lüftungskanal sich durch einen Hohlraum (25) hindurch erstreckt, der zwischen den zwei Trennwänden (30,32) ausgebildet ist.

2. Dachwerbeträger nach Anspruch 1, **dadurch gekennzeichnet, dass** der Eintritt (21) und der Austritt (22) des Lüftungskanals an gegenüberliegenden Enden des Gehäuses (16) angeordnet sind.

3. Dachwerbeträger nach Anspruch 1 oder 2, **gekennzeichnet durch** ein Gebläse (35) um einen Luftstrom in dem Lüftungskanal in Bewegung zu versetzen.

4. Dachwerbeträger nach einem der Ansprüche 1-3, **dadurch gekennzeichnet, dass** die Trennwände (30, 32) zusammen mit einem Abschnitt (26, 27, 31) des Gehäuses (16) eine Umhüllung für die Grafikdisplays (28, 29) bildet.

5. Dachwerbeträger nach Anspruch 4, **gekennzeichnet durch** eine erste Umhüllung (26, 27, 30) für das erste Grafikdisplay (28) und eine zweite Umhüllung (26, 31, 32) für das zweite Grafikdisplay (29) und durch einen zwischen der ersten Umhüllung (26, 27, 30) und der zweiten Umhüllung (26, 31, 32) angeordneten Hohlraum (25).

6. Dachwerbeträger nach Anspruch 5, **gekennzeichnet durch** einen geschlossenen Luftkreislauf zwischen der ersten Umhüllung (26, 27, 30) und der zweiten Umhüllung (26, 31, 32) .

7. Dachwerbeträger nach einem der Ansprüche 1 bis 6, **dadurch gekennzeichnet, dass** das Gehäuse (16) relativ zu dem Grundrahmen (19) zwischen einem Nutzzustand und einem Ruhezustand schwenkbar ist.

8. Dachwerbeträger nach Anspruch 7, **dadurch gekennzeichnet, dass** der Lüftungskanal sich durch das Innere eines eine Schwenkachse definierenden Schwenkzapfens (21, 22) hindurch erstreckt.

9. Dachwerbeträger nach einem der Ansprüche 1 bis 8, **gekennzeichnet durch** ein Taxischild (17, 18), wobei eine Beleuchtung des Taxischilds (17, 18) von einem Schalter (48) abhängt, der durch eine Bewegung des Gehäuses (16) relativ zu dem Grundrahmen (19) betätigt wird.

10. Dachwerbeträger nach einem der Ansprüche 1 bis 9, **dadurch gekennzeichnet, dass** eines oder mehrere elektrische Anschlusskabel des Dachwerbeträgers durch das Innere eines Schwenkzapfens (21, 22) hindurch geführt sind.

11. Dachwerbeträger nach einem der Ansprüche 1 bis 10, **dadurch gekennzeichnet, dass** die Grafikdisplays (28, 29) nach dem Ausschalten der Zündung des Fahrzeugs für eine Nachlaufzeit in Betrieb gehalten werden.

12. Dachwerbeträger nach Anspruch 11, **dadurch gekennzeichnet, dass** die Grafikdisplays (28, 29) während der Nachlaufzeit inaktiviert werden, wenn die Batteriespannung des Fahrzeugs unter einen vorgegebenen Schwellwert absinkt.

13. Dachwerbeträger nach einem der Ansprüche 1 bis 12, **dadurch gekennzeichnet, dass** die Helligkeit des Grafikdisplays (28, 29) in Abhängigkeit von der Umgebungshelligkeit gesteuert wird.

14. Dachwerbeträger nach einem der Ansprüche 1 bis 13, **dadurch gekennzeichnet, dass** eine Steuereinheit (40) die Grafikdisplays (28, 29) wetterabhängig, zeitabhängig und/oder abhängig von der geographischen Position ansteuert.

## Claims

1. Roof advertising carrier for a vehicle (15) having a main frame (19) which supports a housing (16) and having two graphics displays (28, 29) arranged in the housing (16), wherein a ventilation duct is provided which extends through the housing (16), **characterized in that**, within the housing (16), a first separating wall (30) is arranged between the first graphics display (28) and the ventilation duct and a second separating wall (32) is arranged between the second graphics display (29) and the ventilation duct, wherein the ventilation duct extends through a hollow space (25) which is formed between the two separating walls (30, 32).

2. Roof advertising carrier according to Claim 1, **characterized in that** the inlet (21) and the outlet (22) of the ventilation duct are arranged at opposite ends of the housing (16).

3. Roof advertising carrier according to Claim 1 or 2, **characterized by** a fan (35) in order to move an air stream in the ventilation duct.

4. Roof advertising carrier according to one of Claims 1-3, **characterized in that** the separating walls (30, 32), together with a section (26, 27, 31) of the housing (16), form a cover for the graphics displays (28, 29).

5. Roof advertising carrier according to Claim 4, **characterized by** a first cover (26, 27, 30) for the first graphics display (28) and a second cover (26, 31, 32) for the second graphics display (29) and by a hollow space (25) arranged between the first cover (26, 27, 30) and the second cover (26, 31, 32).

6. Roof advertising carrier according to Claim 5, **characterized by** a closed air circuit between the first cover (26, 27, 30) and the second cover (26, 31, 32).

7. Roof advertising carrier according to one of Claims 1 to 6, **characterized in that** the housing (16) can be pivoted between a use state and an inoperative state relative to the main frame (19).

8. Roof advertising carrier according to Claim 7, **characterized in that** the ventilation duct extends through the interior of a pivot pin (21, 22) defining a pivot axis.

9. Roof advertising carrier according to one of Claims 1 to 8, **characterized by** a taxi sign (17, 18), wherein illumination of the taxi sign (17, 18) depends on a switch (48) which is operated by a movement of the housing (16) relative to the main frame (19).

10. Roof advertising carrier according to one of Claims 1 to 9, **characterized in that** one or more electrical connection cables of the roof advertising carrier are guided through the interior of a pivot pin (21, 22).

11. Roof advertising carrier according to one of Claims 1 to 10, **characterized in that** the graphics display (28, 29) is kept in operation for a run-on time after the ignition of the vehicle is turned off.

12. Roof advertising carrier according to Claim 11, **characterized in that** the graphics displays (28, 29) are deactivated during the run-on time when the battery voltage of the vehicle drops below a specified threshold value.

13. Roof advertising carrier according to one of Claims 1 to 12, **characterized in that** the brightness of the graphics display (28, 29) is controlled depending on the brightness of the surrounding area.

14. Roof advertising carrier according to one of Claims 1 to 13, **characterized in that** a control unit (40) drives the graphics displays (28, 29) depending on the weather, depending on the time and/or depending on the geographical position.

## Revendications

1. Support publicitaire de toit destiné à un véhicule (15), ledit support comprenant un cadre de base (19) qui porte un boîtier (16) et deux dispositifs d'affichage graphiques (28, 29) disposés dans le boîtier (16), un conduit de ventilation étant prévu qui s'étend à travers le boîtier (16), **caractérisé en ce que**, à l'intérieur du boîtier (16), une première paroi de séparation (30) est disposée entre le premier dispositif d'affichage graphique (28) et le conduit de ventilation et une deuxième paroi de séparation (32) est disposée entre le deuxième dispositif d'affichage graphique (29) et le conduit de ventilation, le conduit de ventilation s'étendant à travers une cavité (25) qui est formée entre les deux parois de séparation (30, 32) .

2. Support publicitaire de toit selon la revendication 1, **caractérisé en ce que** l'entrée (21) et la sortie (22) du conduit de ventilation sont disposées à des extrémités opposées du boîtier (16).

3. Support publicitaire de toit selon la revendication 1 ou 2, **caractérisé par** un ventilateur (35) destiné à mettre en mouvement un flux d'air dans le conduit de ventilation.

4. Support publicitaire de toit selon l'une des revendications 1 à 3, **caractérisé en ce que** les parois de séparation (30, 32) forment conjointement avec une portion (26, 27, 31) du boîtier (16) une enveloppe destinée aux dispositifs d'affichage graphique (28, 29) .

5. Support publicitaire de toit selon la revendication 4, **caractérisé par** une première enveloppe (26, 27, 30) destinée au premier dispositif d'affichage graphique (28) et une deuxième enveloppe (26, 31, 32) destinée au deuxième dispositif d'affichage graphique (29) et par une cavité (25) disposée entre la première enveloppe (26, 27, 30) et la deuxième enveloppe (26, 31, 32).

6. Support publicitaire de toit selon la revendication 5, **caractérisé par** un circuit d'air fermé entre la première enveloppe (26, 27, 30) et la deuxième enveloppe (26, 31, 32).

7. Support publicitaire de toit selon l'une des revendications 1 à 6, **caractérisé en ce que** le boîtier (16) est pivotant par rapport au cadre de base (19) entre un état d'utilisation et un état de repos.

8. Support publicitaire de toiture selon la revendication 7, **caractérisé en ce que** le conduit de ventilation s'étend à l'intérieur d'un tourillon de pivotement définissant un axe de pivotement (21, 22).

9. Support publicitaire de toit selon l'une des revendications 1 à 8, **caractérisé par** une enseigne de taxi (17, 18), l'éclairage de l'enseigne de taxi (17, 18) dépendant d'un commutateur (48) qui est actionné par le déplacement du boîtier (16) par rapport au cadre de base (19).

10. Support publicitaire de toit selon l'une des revendications 1 à 9, **caractérisé en ce qu'**un ou plusieurs câbles de raccordement électrique du support publicitaire de toit sont passés à l'intérieur d'un tourillon d'articulation (21, 22).

11. Support publicitaire de toit selon l'une des revendications 1 à 10, **caractérisé en ce que** les dispositifs d'affichage graphique (28, 29) sont maintenus en fonctionnement après coupure du contact du véhicule pendant un temps de retard.

12. Support publicitaire de toit selon la revendication 11, **caractérisé en ce que** les dispositifs d'affichage graphique (28, 29) sont désactivés pendant le temps de retard lorsque la tension de batterie du véhicule descend au-dessous d'une valeur seuil spécifiée.

13. Support publicitaire de toit selon l'une des revendications 1 à 12, **caractérisé en ce que** la luminosité du dispositif d'affichage graphique (28, 29) est commandée en fonction de la luminosité ambiante.

14. Support publicitaire de toit selon l'une des revendications 1 à 13, **caractérisé en ce qu'**une unité de commande (40) commande les dispositifs d'affichage graphique (28, 29) en fonction de la météo, de l'heure et/ou de la position géographique.
